# FASCICULE DE BREVET EUROPEEN

(11) **EP 0 448 479 B1**
(45) Date de publication et mention de la délivrance du brevet: **19.10.1994**
(21) Numéro de dépôt: 91400783.6
(22) Date de dépôt: 22.03.1991
(51) Int. Cl.: F16D 23/14

(54) **Ensemble d'accostage pour diaphragme d'un embrayage, notamment pour véhicules automobiles**
Druckvorrichtung für eine Kupplungstellerfeder, insbesondere für Kraftfahrzeuge
Thrust assembly for a clutch diaphragm spring, especially for automotive vehicles

(30) Priorité: 23.03.1990 FR 9003733
(43) Date de publication de la demande: 25.09.1991
(73) Titulaire: VALEO, 75848 Paris Cédex 17 (FR)
(72) Inventeur: Gay, Christian, F-80090 Amiens (FR); Regulski, Bernard, F-80080 Amiens (FR)
(74) Mandataire: Gamonal, Didier

(56) Documents cités:
- FR-A- 2 544 035
- FR-A- 2 633 353

## Description

La présente invention concerne un ensemble d'accostage pour un diaphragme d'embrayage, notamment pour véhicules automobiles, du genre comportant, pour l'action en traction d'une butée de débrayage sur le diaphragme de l'embrayage, d'une part, une pièce d'accostage présentant, globalement radialement, une collerette, propre à son appui sur le diaphragme du côté de celui-ci opposé à la butée de débrayage, et, globalement axialement, d'une douille propre à traverser le diaphragme à la faveur de son ouverture centrale, et, d'autre part, s'étendant annulairement à l'intérieur de ladite douille de cette pièce d'accostage un jonc de couplage, qui, élastiquement déformable radialement, est propre à un attelage de la butée de débrayage par simple encliquetage de celle-ci.

Un tel montage est décrit dans le document FR-A-2 633 353.

Dans celui-ci, le jonc est retenu axialement, lors du montage par encliquetage de la butée sur la pièce d'accostage, par une cage formée axialement entre ladite douille et la pièce de retenue rapportée par une rondelle élastique sur la collerette, à la faveur de pattes axiales, que présente ladite rondelle.

La rondelle a donc une double fonction, à savoir, une fonction d'assujettissement de la pièce d'accostage au diaphragme et d'assujettissement d'une pièce de retenue à la pièce d'accostage.

Ainsi lorsqu'on effectue un démontage de la pièce d'accostage après utilisation sur le véhicule, la pièce de retenue est démontée ainsi que le jonc et la cage.

Il se pose alors un problème, car après remontage, le jonc peut ne pas occuper la position souhaitée, voire même se mettre en biais.

Il en est d'autant plus ainsi, que la constitution de la cage nécessite que celle-ci ait une certaine largeur en plus de l'épaisseur du jonc, pour permettre un mode d'assemblage par encliquetage avec la rondelle élastique.

Néanmoins, cette disposition est favorable à une bonne compacité axiale de l'ensemble d'accostage au niveau de sa périphérie externe, en sorte qu'il est souhaitable de ne pas perdre ce bénéfice.

Pour cette raison, on a prévu dans le document FR-A-2 588 338, conforme au préambule de la revendication 1, de rapporter la plaque de retenue par sertissage, au contact d'une portion de la face dorsale de ladite collerette opposée à son bourrelet d'appui pour le diaphragme, à la faveur d'entailles pratiquées dans ladite collerette à section globalement en forme de V avec à sa périphérie externe une partie dégageante.

Dans ce document la plaque de retenue pénètre dans la douille de la pièce d'accostage et présente des pattes de sertissage pénétrant dans les entailles pour son sertissage sur la pièce d'accostage.

En pratique cette plaque est crochetée par ses pattes de sertissage sur la pièce d'accostage, en sorte que lesdites pattes sont pliées au contact de la collerette et traversent les entailles.

Ce crochetage est effectué dans la région du coude arrondi de raccordement de la collerette avec la douille.

La périphérie interne de la collerette est donc trouée.

Cette solution n'est pas entièrement satisfaisante car cela conduit, d'une part à affaiblir la collerette au niveau de sa racine, et, d'autre part, à un pliage non satisfaisant à cause de la présence du coude de raccordement de la collerette à la douille.

Ainsi il importe de ne pas affaiblir la pièce d'accostage.

La présente invention a pour objet de répondre à ces souhaits et donc de créer un sous-ensemble robuste plaque de retenue-pièce d'accostage permettant un démontage et un remontage irréprochable, tout en étant compact axialement, d'une grande durée de vie et en créant un assujettissement ferme de la plaque de retenue avec la pièce d'accostage.

Suivant l'invention un ensemble d'accostage du type susindiqué est caractérisé en ce que les entailles s'étendent radialement au-delà dudit bourrelet dans la partie dégageante de la collerette, en ce que les entailles sont pratiquées dans la face de la collerette opposée à sa face dorsale, en ce que ladite face dorsale présente une surface continue au niveau des entailles, et en ce que les pattes de sertissage sont pliées dans les entailles.

Grâce à l'invention il est formé un sous-ensemble imperdable, en sorte qu'après remontage, le jonc peut occuper la position souhaitable désirée, grâce notamment à la possibilité de création d'une cage de largeur voisine de l'épaisseur du jonc. On appréciera que le nombre d'entailles peut être élevé.

En outre ce mode d'assemblage est très robuste et compact axialement. Aucune interférence avec le diaphragme n'est à craindre.

De plus, la pièce d'accostage peut être convenablement rapportée sur le diaphragme à l'aide d'un autre type d'assemblage qu'une rondelle à pattes.

On appréciera que le sertissage conduit à la formation de pattes dans la pièce de retenue, lesdites pattes pénétrant dans les entailles avantageusement à fond incliné. Elles remplissent les entailles.

Grâce à cette disposition, on obtient un assujettissement ferme et d'une grande durée de vie.

En outre grâce à l'invention, la périphérie interne de la collerette est intacte et il est possible de créer des bossages affectant la douille et la collerette, pour prémontage du jonc de couplage, en sorte que la longueur axiale de la pièce d'accostage peut être réduite.

Enfin en alternance circonférentielle avec les entailles périphériques de la pièce d'accostage, il est possible de réaliser des fonctions d'assemblage et/ou de blocage en rotation, tout en ayant une collerette suffisamment robuste.

La description en annexe illustre l'invention en référence aux dessins annexés dans lesquels :
- la figure 1 est une vue en élévation avec arrachement local d'un mécanisme d'embrayage équipé d'un ensemble selon l'invention ;
- la figure 2 est une vue en coupe axiale d'un ensemble pièce d'accostage-butée de débrayage équipé de la pièce de retenue selon l'invention ;
- la figure 3 est une vue analogue à la figure 2 mais pour une position de désencliquetage de la butée ;
- la figure 4 est une vue en élévation montrant le jonc ;
- la figure 5 est une vue selon la flèche G de la figure 3 montrant l'ensemble d'accostage selon l'invention sans la rondelle élastique ;
- la figure 6 est une vue en élévation montrant la rondelle élastique ;
- la figure 7 est une vue à plus grande échelle montrant le pont et tel que repéré par l'encart C de la figure 6 ;
- la figure 8 est une vue en coupe selon la ligne B-B de la figure 6 ;
- la figure 9 est une vue en coupe selon la ligne A-A de la figure 6 ;
- la figure 10 est une vue en coupe selon la ligne A-A de la figure 5 ;
- la figure 11 est une vue en coupe selon la ligne B-B de la figure 5 ;
- la figure 12 est une vue en coupe selon ligne C-C de la figure 5.

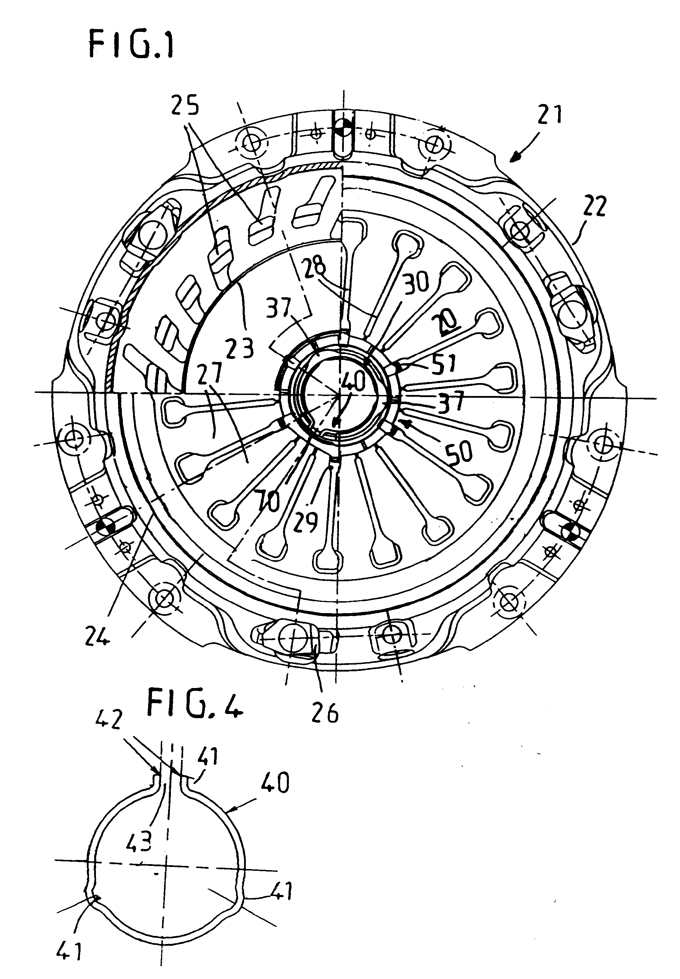

Tel qu'illustré dans les figures 1,2,3, il est mis en oeuvre, pour l'attelage d'une butée de débrayage 10 sur le diaphragme 20 d'un embrayage, d'une part, une pièce d'accostage 30 (ou coupelle d'appui) assujettie, par un montage décrit ultérieurement, à ce diaphragme 20 et, d'autre part, un jonc de couplage 40, élastiquement déformable radialement, porté par la pièce d'accostage 30 et propre à un encliquetage de la butée 10 sur la pièce d'accostage 30.

L'embrayage est du type "tiré" et comporte un mécanisme d'embrayage unitaire 21 avec un couvercle 22 de fixation, un plateau de pression 23 et le diaphragme 20.

Le fond du couvercle 22 est ouvert et offre un cordon d'appui 24 à la partie périphérique rondelle Belleville du diaphragme 20 annulaire.

Le plateau 23 offre également un appui 25, ici fractionné, au diaphragme 20.

Le plateau 23 est mobile axialement par rapport au couvercle 22 en étant lié en rotation à celui-ci, ici par des languettes tangentielles 26.

Le cordon 24 est disposé radialement au-dessus de l'appui 25, en sorte que pour débrayer il faut agir en traction, dans le sens de la flèche F de la figure 2, sur l'extrémité interne des doigts 27 du diaphragme 20 pour annuler la sollicitation qu'exerce normalement ledit diaphragme 20 sur le plateau 23.

Les doigts 27 forment la partie interne du diaphragme 20, d'une part, fragmentée en doigts 27 par des fentes 28, et d'autre part, centralement ouverte pour le passage d'une douille 33 de la pièce 30.

Le diaphragme 20 est doté d'échancrures 29 élargies, au nombre de six ici, à l'extrémité interne des doigts 27 pour passage de pattes 51 d'assemblage, d'orientation, globalement axiales, d'une rondelle élastique 50 ondulée à action axiale.

C'est cette rondelle, qui permet ici de rapporter convenablement la pièce d'accostage sur le diaphragme, et qui porte axialement sur une première face de l'extrémité interne des doigts 27, celle tournée vers la butée 10, et est crochetée, directement ou indirectement, par ses pattes 51 sur la pièce d'accostage 30 après traversée axiale des échancrures 29.

Ainsi la rondelle 50 prend appui sur une première face du diaphragme et sollicite la pièce 30 au contact de la deuxième face des doigts 27, celle tournée à l'oppposé de la butée 10.

Pour ce faire, la pièce d'accostage 30, de forme annulaire, est dotée ici, globalement radialement, d'une collerette 31 profilée pour présenter sur l'une de ses faces un bourrelet d'appui 32 annulaire, en ayant ainsi globalement la forme d'un V en section avec à sa périphérie externe une partie dégageante.

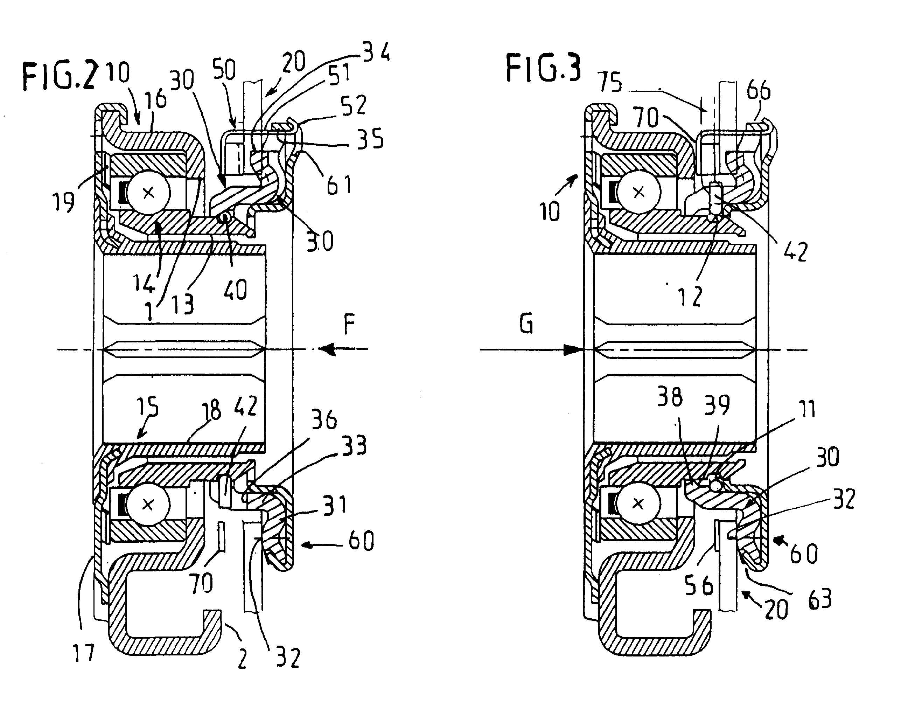

C'est ce bourrelet 32 qui porte sur le diaphragme 20 (figures 2 et 3) en étant maintenu axialement sans jeu au contact de l'extrémité des doigts 27 par la rondelle 50. Un serrage élastique du diaphragme est ainsi réalisé. L'autre face de la collerette 31, dite face dorsale, forme une face de contact, de manière décrite ci-après, pour une plaque de retenue 60.

La pièce 30, avantageusement en tôle emboutie, présente à sa périphérie interne une douille 33, qui se raccorde à la collerette 31 par un coude de pliage arrondi et qui, s'étendant globalement axialement, traverse l'ouverture centrale du diaphragme 20.

La collerette 31 est dotée, à sa périphérie interne, de déformations locales saillantes axialement 34, ici au nombre de trois, pour pénétration dans les échancrures 29 et blocage en rotation de la pièce 30 par rapport au diaphragme 20.

Cette collerette 31 est munie à sa périphérie externe de six échancrures 35, régulièrement réparties circulairement comme les pattes 51, pour passage desdites pattes 51 dont l'extrémité libre 52 est en forme de crochet, pour venir en prise, du côté opposé au diaphragme, avec la face dorsale d'une pièce de retenue 60.

Bien entendu on peut prévoir un autre mode d'assemblage, par exemple un sertissage, l'extrémité des pattes 51 étant rabattue radialement.

Ici la rondelle 50 est donc crochetée sur la pièce 60 grâce à des retours 52, en forme de crosse-d'évêque, dirigés à l'opposé de l'axe de la pièce 30.

Le jonc de couplage 40 comporte, pour son maintien par rapport à la pièce d'accostage 30, au moins deux pattes 41 saillantes radialement vers l'extérieur, dont l'une est ouverte.

Ici la douille 33 présente, à son extrémité libre, une échancrure 36 et deux bossages 37 ainsi qu'un rebord radial 38 dirigé vers l'axe de l'ensemble et délimitant l'extrémité libre de ladite douille 33.

Les bossages 37 s'étendent radialement en dessous du diaphragme 20, en ayant une faible hauteur.

Pour son maintien précentré par rapport à la coupelle 30, le jonc 40 présente, ici trois pattes 41 saillantes, dont l'une est ouverte par une fente 43 pour délimitation des brins radiaux 42, les pattes fermées 41 étant disposées symétriquement par rapport à la patte ouverte.

Les bossages 37 sont destinés à recevoir, de manière complémentaire, deux des pattes 41, s'étendant globalement radialement, tandis que l'échancrure 36, ouverte axialement, est propre à recevoir la patte ouverte 41 et à permettre un passage à jeu circonférentiel des brins radiaux 42, lesquels s'étendent en-dessous de la rondelle 50.

On notera que les bossages 37 et l'échancrure 36 sont disposés globalement à 120° les uns par rapport aux autres. L'échancrure 36 est profonde et s'étend jusqu'au voisinage du diaphragme 20.

Les bossages 37 sont réalisés par déformation radiale saillante vers l'extérieur de la douille 33 et affectent axialement la totalité de celle-ci, ainsi que la racine de la collerette 31. Ils sont fermés axialement par le rebord 38, en étant circonférentiellement continus avec la partie courante de la douille 33.

Ces bossages 37 affectent une portée tronconique 39 adjacente au rebord 38 en interrompant celle-ci et sont réalisés ici par emboutissage, comme la pièce 30.

La portée 39 est pratiquée dans l'alésage interne de la douille 33.

Ce jonc 40, ici de forme globalement annulaire, suivant une caractéristique de l'invention, a une forme plane, en étant réalisé en fil rond, deux de ses pattes 41 étant globalement en forme de demi-onde, complémentaires à celles des bossages 37, les brins 42 s'étendant radialement en direction de la rondelle 50.

Le jonc 40 est porté intérieurement par l'alésage interne de la douille 33.

Il est propre à prendre appui après montage de la butée, d'une part, sur la portée tronconique 39, et d'autre part, sur une portée d'entraînement 11 formée par l'un des flancs d'une gorge 12 que présente la butée de débrayage 10.

Le jonc 40 permet une solidarisation axiale au moins dans le sens de la flèce F de la figure 2 entre la pièce 30 et la butée 10.

Cette butée 10 comporte un élément de manoeuvre 15, propre à être soumis à l'action d'un organe de commande, telle qu'une fourchette de débrayage, et un élément d'attaque 13 propre à agir en traction sur le diaphragme 20 par l'intermédaire du jonc 40 et de la pièce 30.

Ici l'élément 13 est formé à la faveur d'un prolongement axial de la bague interne d'un roulement à billes 14, qui est attelé par un capot 16 à l'élément 15.

Cet élément de manoeuvre 15 a une forme de L inversée en section et comporte un flasque métallique transversal 17 sur lequel est surmoulé un manchon axial 18 en matière plastique, pour coulissement sur un quelconque organe de guidage, telle qu'une trompette de débrayage.

La butée 10 est type à auto-centrage maintenu et présente pour ce faire un moyen élastique à action axiale 19, ici une rondelle ondulée, qui prend appui sur le flasque 17, pour sollicitation de la bague externe du roulement 14 en direction d'un rebord radial 1 dirigé vers l'axe de l'ensemble du capot 16 assemblé par sertissage (figure 2) avec le flasque 17 et à l'aide de pattes repliées dudit flasque 17.

C'est sur des rebords radiaux 2, en forme de crochets de retenue, du capot 16 qu'est propre à agir ici une fourchette de débrayage.

Le jonc 40 radialement élastiquement déformable est retenu axialement lors du montage par encliquetage de la butée 10 sur la pièce 30 (dans le sens de la flèche G de la figure 3), par une cage 67 formée axialement entre la douille 33 et la pièce de retenue 60 rapportée sur la collerette 31, ladite plaque 60 présentant des ouvertures 61 pour le passage des pattes 51 et crochetage de celles-ci (figures 2 et 3).

Plus précisément, la plaque de retenue 60 est rapportée par sertissage sur la pièce d'accostage 30 à la faveur d'entailles 62. Ces entailles sont pratiquées dans la collerette 31 à section globalement en forme de V avec à sa périphérie externe une partie dégageante.

La plaque de retenue 60 pénètre dans la douille 33 et présente des pattes de sertissage 63 pénétrant dans les entailles 62, pour son sertissage sur la pièce d'accostage 30.

Cette plaque 60 est rapportée par sertissage au contact au moins d'une portion dorsale de ladite collerette 31 opposée audit bourrelet 32.

Suivant l'invention, un ensemble d'accostage du type sus-indiqué est caractérisé en ce que les entailles 62 s'étendent radialement au-delà dudit bourrelet 32 dans la partie dégageante de la collerette 31, en ce que les entailles 62 sont pratiquées dans la face de la collerette 31 opposée à sa face dorsale, en ce que ladite face dorsale présente une surface continue au niveau des entailles 62, et en ce que les pattes de sertissage sont pliées dans les entailles 62.

C'est donc sur la face de la collerette 31 opposée à sa face dorsale de contact avec la plaque 60, que sont pratiquées les entailles 62 ; ladite face dorsale n'étant pas interrompue au niveau des entailles 62.

Grâce à ceci, aucune interférence avec le diaphragme n'est à craindre, la plaque de retenue, ne faisant pas saillie axiale par rapport au bourrelet 32.

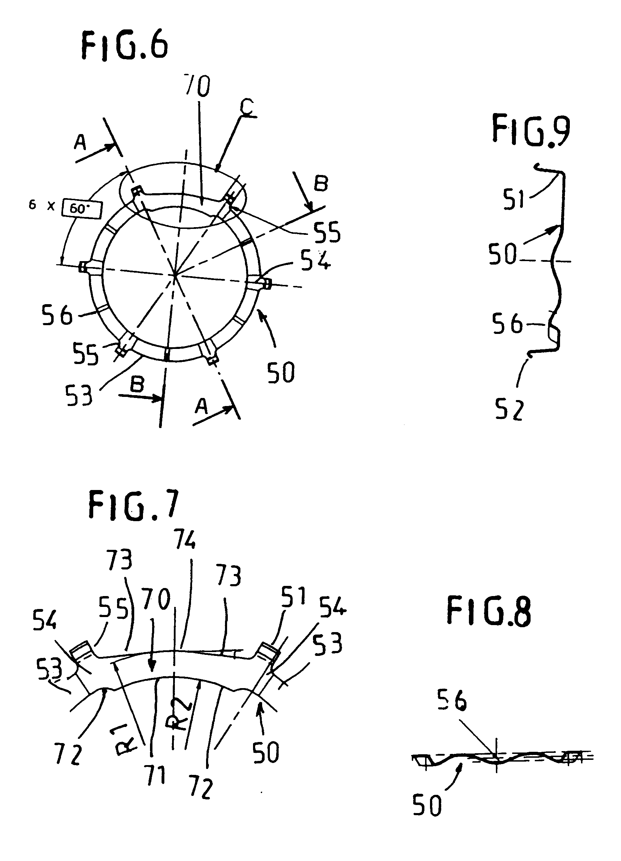

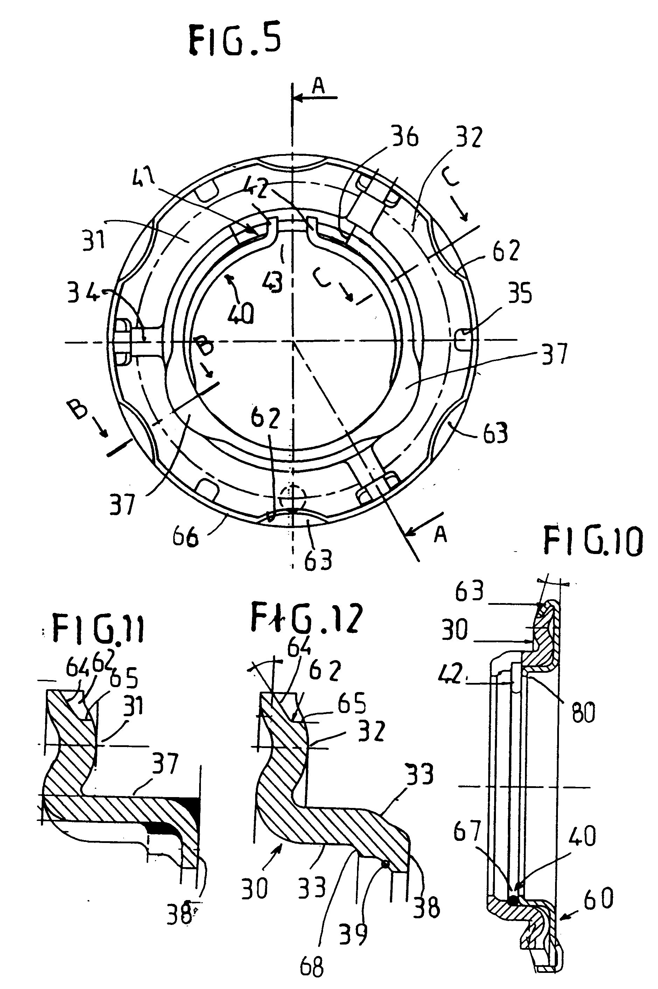

Comme mieux visible dans les figures 5 et 10, la pièce 60 présente un rebord axial 66 à sa périphérie externe, dans lequel sont pratiquées par déformation (rabattement de matière), des pattes 63 circonférentiellement en forme de demi-ondes tournées vers l'axe de l'ensemble, comme les entailles 62, pénétrant de manière complémentaire, dans lesdites entailles 62 lors de l'opération de sertissage ainsi réalisée.

Ces entailles 62 sont délimitées intérieurement par un fond 64 sous forme d'une paroi inclinée s'évasant en direction de la périphérie externe de la collerette 31, dont l'angle d'inclinaison est représenté à la figure 12, ledit fond 64 débouchant à la périphérie externe de la pièce d'accostage et se raccordant à sa périphérie interne par une paroi 65 d'orientation globalement axiale et parallèle à l'axe de l'ensemble d'accostage.

Le rebord 66 coiffe la collerette 31 et présente donc des pattes de sertissage 63 convenablement pliées et noyées dans les entailles 62 sans risque de formation d'amorce de rupture, ou analogue, dans le rebord 66.

Grâce à ceci, un démontage et un remontage irréprochable de la butée peut être réalisé, tout en ayant un bon remplissage des entailles 62 par les pattes 63 et un assujettissement ferme de la pièce de retenue dans le sens axial et circonférentiel.

Cet assemblage est d'une grande durée de vie et est robuste, la résistance de la collerette 31 étant globalement conservée.

On notera que la pièce de retenue est centrée intérieurement par la douille 33 et qu'elle présente à son extrémité libre un rebord radial 80 dirigé vers l'axe de l'ensemble, pour formation de la cage 67 de retenue du jonc.

L'alésage interne de la douille 33 présente un changement de diamètre avec formation d'une portée 68 de forme complémentaire au jonc, pour délimitation de la cage 67 qui peut avoir ainsi grâce à l'invention une largeur très proche de l'épaisseur du jonc 40 de section circulaire.

On notera que c'est la partie de plus petit diamètre qui se raccorde à la portée 39.

Avant montage ou remontage de la butée, le jonc est donc emprisonné avec un faible jeu entre la pièce 60 et ladite portée 68.

Grâce à cette disposition, le jonc est dans une position prédéterminée correspondant à sa position souhaitée et ne risque pas de se mettre en biais.

Comme mieux visible à la figure 5, suivant une autre caractéristique, deux des pattes 63 et des entailles 62, en forme de demi-ondes, sont disposées en regard des bossages 37 eux aussi, globalement en forme de demi-ondes, dirigés en sens inverse, tandis qu'une autre patte est dirigée vers l'échancrure 36 en étant dans l'axe médian de celle-ci.

Les bossages 37 sont disposés circonférentiellement entre une déformation locale 34 et une échancrure 35, tandis que les protubérances 34 sont disposées circonférentiellement entre deux entailles 62.

On notera que les protubérances 34 sont en correspondance avec certaines des échancrures 35.

Tout ceci permet d'avoir une collerette résistante tout en assurant de multiples fonctions.

Ici les brins 42 du jonc 40 sont disposés dans un plan radial médian pénétrant axialement entre le diaphragme 20 et la rondelle 50 comportant globalement une paroi transversale avec des ondulations 53, régulièrement réparties circulairement, s'étendant circonférentiellement chacune entre deux pattes axiales 51. Les brins 42 s'étendent radialement dans l'ouverture du diaphragme 20 et de la rondelle 50 radialement en-dessous d'une languette décrite ci-après.

Les pattes 51 s'étendent en saillie axiale par pliage à partir de la périphérie externe de la rondelle 50 et se raccorde à celles-ci chacune par une zone d'ancrage globalement plane 54.

Cette zone 54 s'étend sur toute la hauteur de la rondelle 50 en forme de couronne, et se prolonge radialement en saillie, par rapport à la périphérie externe de la rondelle 50, par une zone radiale 55, dite de raccordement.

Cette zone 55 est rétrécie et est globalement de même largeur que les pattes 51, pour raccordement à celles-ci.

La zone 54 va en s'amincissant de la périphérie externe à la périphérie interne de la rondelle 50 et s'étend symétriquement de part et d'autre de l'axe de la patte 51 et de l'axe de la zone 55.

Les ondulations 53 ont une forme d'arc de cercle, et s'étendent chacune entre deux zones d'ancrage 54 successives, avec dans leur zone médiane un sommet 56 au contact du diaphragme 20.

Bien entendu en variante chaque ondulation 53 peut présenter plusieurs sommets.

L'une des ondulations 53 est remplacée par un pont 70 reliant entre elles deux zones d'ancrage successives en étant dans le même plan que celles-ci.

Ledit pont 70 est en correspondance avec la patte ouverte 41 du jonc 40 pour accès à celle-ci.

Ce sont donc les sommets 56 des deux ondulations 53 encadrant le pont 70 qui soutiennent celui-ci, en sorte qu'un espace axial est ménagé entre le pont 70 et le diaphragme 20 pour accès à la patte ouverte 41.

Le pont 70 s'étend radialement, intérieurement en saillie par rapport à la périphérie interne de la rondelle 50.

Cette saillie forme ici une languette 71 raccordée à chacune de ses extrémités circonférentielles, par un arrondi 72 à la zone d'ancrage 54 concernée.

Le pont 70 s'étend à sa périphérie externe, globalement en-deçà de la circonférence délimitant la périphérie externe de la rondelle 30.

Ce pont 70 est délimité extérieurement par deux lignes rectilignes inclinées se raccordant de manière symétrique à un sommet 74 médian en arc de cercle du pont 70.

Ces lignes 73 se raccordent par un arrondi aux zones 55.

Le sommet 74 est situé sur une circonférence de rayon R1 légèrement inférieur au rayon de la circonférence délimitant la périphérie externe de la rondelle 50, tandis que l'extrémité de la languette 71 est en arc de cercle de rayon R2 inférieur à celui délimitant la périphérie interne de la rondelle 50.

Ainsi l'encombrement radial externe de la rondelle 50 n'est pas augmenté, tout en ayant suffisamment de matière grâce à la languette 71 pour avoir un pont résistant et sans trop perturber l'élasticité de la rondelle 50, la languette 71 étant faiblement saillante.

Le basculement du diaphragme n'est pas gêné ainsi par le pont 70 et en outre il est réalisé un détrompeur pour l'indexation de la rondelle 50 afin que le pont 70 soit disposé en correspondance avec l'échancrure 36.

La hauteur du pont est maximum au niveau des zones d'ancrage 54 et est minimum au niveau du sommet 74.

Ainsi il est possible d'engager une pince conformée 75 (figure 3) entre le diaphragme 20 et le rondelle 50, pour ouvrir circonférentiellement le jonc 40 en agissant sur les brins 42 saillants de celui-ci, les lignes 73 et le sommet 74 permettant un dégagement aisé de la pince 75.

On notera qu'au cours de cette ouverture la pince 75 n'est nullement gênée par une quelconque ondulation et qu'un espace circonférentiel assez grand est présent, ladite pince 75 pouvant même passer sous les zones d'ancrage 54.

Le démontage s'effectue en effectuant une surcourse de la butée selon la flèche G de la figure 3, tout en ouvrant le jonc 40 avec la pince 75 puis en déplaçant ensuite la butée en sens inverse, le jonc 40 étant toujours maintenu ouvert par la pince 75.

Même dans le cas (figure 2) où les brins sont disposés au niveau du rebord 2, un démontage est possible.

On étend donc les possibilités de démontage, tout en ayant un ensemble butée-pièce d'accostage très compact axialement.

On appréciera que les bossages 37 permettent de ne pas affaiblir la douille 33, et que le sertissage de la plaque 60 est favorable à la compacité de l'ensemble tout en permettant un démontage et un remontage irréprochable de la butée.

On notera que la douille 33 est également courte grâce aux bossages 37, ainsi que l'élément d'attaque 13.

Tout ceci rend économique la butée de débrayage et la pièce d'accostage, tout en ayant une pièce d'accostage suffisamment robuste avec l'échancrure 36 s'étendant jusqu'au niveau du rebord 80, au voisinage du diaphragme 20.

Bien entendu la présente invention n'est pas limitée aux exemples de réalisation décrits, en particulier la butée 10 peut ne pas être du type auto-centreuse, le roulement 14 étant dans ce cas monté sans jeu radial par rapport au capot, et étant en contact direct avec le flasque 17.

Bien entendu la pince 75 est conformée selon les applications et peut avoir une partie légèrement inclinée, comme visible à la figure 3.

Le manchon 18 peut être d'un seul tenant avec le flasque 17 et l'assemblage élément d'attaque 13, élément de manoeuvre 15 peut être réalisé par clipsage.

Les brins 42 peuvent être disposés dans un plan médian qui pénètre dans l'espace axial délimité par la rondelle 50 et le diaphragme 20 ou en variante ne pas pénétrer dans ledit espace, comme par exemple à la figure 1 du document FR-A-2 633 353, l'outil de démontage étant conformé en conséquence.

La patte ouverte 43 peut présenter deux branches en arc de cercle, éventuellement dotée de prolongements axiaux, comme décrit dans le susmentionné document FR-A-2 597 560.

Dans ce cas, deux pattes radiales seulement peuvent être prévues.

La pièce d'accostage 30 peut être, grâce à l'invention, convenablement assujettie au diaphragme 20 selon la disposition décrite dans le susmentionné document FR-A-2 597 560.

Dans ce cas, la collerette présente de place en place à sa périphérie externe des pattes axiales qui traversent également axialement le diaphragme, chacune entre deux doigts radiaux 27 adjacents de celui-ci, et qui, chacune respectivement porte, circonférentiellement en porte-à-faux, à leur extrémité, au droit de la collerette 31, et globalement parallèlement à celle-ci, des doigts de retenue propres à assurer, en coopération avec la collerette, le maintien axial de l'ensemble d'accostage sur l'embrayage 20.

Enfin la patte ouverte 41 peut pénétrer dans l'échancrure 36 en la traversant complètement.

## Revendications

1. Ensemble d'accostage, du genre comportant, pour l'action en traction d'une butée de débrayage (10) sur le diaphragme (20) d'un embrayage, d'une part, une pièce d'accostage (30) dotée, globalement radialement, d'une collerette (31) à section en forme de V présentant une partie dégageante à sa périphérie externe, une face dorsale et, sur l'autre de ses faces, un bourrelet annulaire d'appui (32) propre à prendre appui sur le diaphragme (20) du côté de celui-ci opposé à la butée de débrayage (10) et, globalement axialement, d'une douille (33) propre à traverser le diaphragme (20) à la faveur de son ouverture centrale, et, d'autre part, s'étendant annulairement à l'intérieur de ladite douille (33), un jonc de couplage (40), qui, élastiquement déformable radialement, est propre à un attelage de la butée de débrayage (10) par simple encliquetage de celle-ci, ledit jonc de couplage (40) étant retenu axialement, lors du montage par encliquetage de la butée de débrayage (10) sur la pièce d'accostage (30), par une cage (67) formée axialement entre la douille (33) de la pièce d'accostage (30) et une pièce de retenue (60) rapportée par sertissage, au contact d'au moins une portion de la face dorsale de ladite collerette (31) opposée audit bourrelet (32), à la faveur d'entailles (62) pratiquées dans ladite collerette (31), dans lequel la plaque de retenue (60) pénètre dans ladite douille (33) et présente des pattes de sertissage (63) pénétrant dans lesdites entailles (62) pour son sertissage sur la pièce d'accostage (30), caractérisé en ce que les entailles (62) s'étendent radialement au-delà dudit bourrelet (32) dans la partie dégageante de la collerette (31), en ce que les entailles (62) sont pratiquées dans la face de la collerette (31) opposée à sa face dorsale, en ce que ladite face dorsale présente une surface continue au niveau des entailles (62), et en ce que les pattes de sertissage (63) sont pliées dans les entailles (62).

2. Ensemble d'accostage selon la revendication 1, caractérisé en ce que les pattes de sertissage (63) sont noyées dans les entailles (62).

3. Ensemble d'accostage selon la revendication 1 ou 2, caractérisé en ce que lesdites entailles (62) sont délimitées par un fond (64) ayant une paroi inclinée débouchant à la périphérie externe de la collerette (31) de la pièce d'accostage (30).

4. Ensemble d'accostage selon la revendication 3, caractérisé en ce que ledit fond (64) s'évase en direction de la périphérie externe de la collerette (31).

5. Ensemble d'accostage selon la revendication 4, caractérisé en ce que ledit fond (64) se raccorde à sa périphérie interne à une paroi (65) d'orientation axiale parallèle à l'axe de l'ensemble d'accostage.

6. Ensemble d'accostage selon l'une quelconque des revendications précédentes, caractérisé en ce que lesdites entailles (62) ont circonférentiellement une forme en demi-onde tournée vers l'axe de l'ensemble.

7. Ensemble d'accostage selon la revendication 6, caractérisé en ce que les pattes de sertissage (63) ont, après assemblage aux entailles (62), une forme en demi-onde tournée vers l'axe de l'ensemble et en ce que lesdites pattes (63) pénètrent dans les entailles (62).

8. Ensemble d'accostage selon la revendication 7, caractérisé en ce que lesdites pattes (63) sont formées à la faveur d'un rebord axial (66), que présente la pièce de retenue (60) à sa périphérie externe pour venir coiffer la collerette (31).

9. Ensemble d'accostage selon l'une quelconque des revendications précédentes, caractérisé en ce que la douille (33) de la pièce d'accostage (30) présente des bossages (37) disposés en regard de certaines desdites entailles (62).

10. Ensemble d'accostage selon la revendication 9, caractérisé en ce que la douille (33) de la pièce d'accostage (30) présente une échancrure ouverte axialement (36) en regard d'une entaille (62).

11. Ensemble d'accostage selon l'une quelconque des revendications précédentes, caractérisé en ce que la collerette (31) de la pièce d'accostage (30) présente à sa périphérie interne des déformations locales (34) de blocage en rotation disposées circonférentiellement entre deux entailles (62), pour pénétration dans des échancrures du diaphragme (20).

12. Ensemble d'accostage selon la revendication 11, dans lequel la collerette (31) de la pièce d'accostage présente à sa périphérie externe des échancrures (35) pour passage de pattes (51) axiales appartenant à une rondelle élastique (50), caractérisé en ce que les échancrures alternent circonférentiellement avec les entailles (62).

13. Ensemble d'accostage selon les revendications 11 et 12, caractérisé en ce que les déformations locales (34) sont en correspondance avec certaines échancrures (35).

14. Ensemble d'accostage selon l'une quelconque des revendications 1 à 13, dans lequel la collerette (31) se raccorde à la douille (33) par un coude arrondi, caractérisé en ce que ledit coude et la périphérie interne de la collerette (31) sont continus.

## Patentansprüche

1. Druckvorrichtung, die für die unter Zugkraft erfolgende Einwirkung eines Ausrücklagers (10) auf die Tellerfeder (20) einer Kupplung einerseits einen Druckring (30) umfaßt, der einen insgesamt radial angeordneten Kragen (31) mit V-förmigem Querschnitt besitzt, mit einem an seiner Außenperipherie freiliegenden Teil, einer Rückenfläche und einem auf seiner anderen Seite vorgesehenen ringförmigen Auflagewulst (32) für die Auflage auf der Tellerfeder (20) auf ihrer dem Ausrücklager (10) gegenüberliegenden Seite, sowie eine insgesamt axial ausgerichtete Hülse (33) für die Durchführung durch die Tellerfeder (20) vermittels ihrer mittigen Öffnung, und andererseits einen ringförmig im Innern der besagten Hülse (33) angeordneten Kopplungsring (40), der radial elastisch verformbar ist, um die Anbringung des Ausrücklagers (10) durch einfaches Einrasten zu ermöglichen, wobei dieser Kopplungsring (40) bei dem mittels Einrasten vorgenommenen Einbau des Ausrücklagers (10) auf dem Druckring (30) axial in einer Aufnahme (67) gehalten wird, die axial zwischen der Hülse (33) des Druckrings (30) und einem Halteteil (60) gebildet wird, das durch Falzung in Kontakt zumindest mit einem Abschnitt der Rückenfläche des Kragens (31), die dem besagten Wulst (32) gegenüberliegt, anhand von Einschnitten (62) angebracht ist, die im Kragen (31) vorgesehen sind, wobei die Halteplatte (60) in die Hülse (33) eindringt und Falzklammern (63) aufweist, die in die Einschnitte (62) eingreifen, um sie mittels Falzung am Druckring (30) anzubringen , **dadurch gekennzeichnet,** daß sich die Einschnitte (62) radial vor dem besagten Wulst (32) im freiliegenden Teil des Kragens erstrecken (31), daß die Einschnitte (62) auf der Seite des Kragens (31) vorgesehen sind, die seiner Rückenfläche gegenüberliegt, daß diese Rückenfläche eine durchgehende Fläche in Höhe der Einschnitte (62) aufweist und daß die Falzklammern (63) in den Einschnitten (62) umgebogen sind.

2. Druckvorrichtung nach Anspruch 1 , **dadurch gekennzeichnet,** daß die Falzklammern (63) in die Einschnitte (62) eingelassen sind.

3. Druckvorrichtung nach Anspruch 1 oder 2 , **dadurch gekennzeichnet,** daß die Einschnitte (62) durch einen Boden (64) mit einer geneigten Wand begrenzt werden, die zur Außenperipherie des Kragens (31) des Druckrings (30) führt.

4. Druckvorrichtung nach Anspruch 3 , **dadurch gekennzeichnet,** daß sich der besagte Boden (64) in Richtung der Außenperipherie des Kragens (31) erweitert.

5. Druckvorrichtung nach Anspruch 4 , **dadurch gekennzeichnet,** daß sich der besagte Boden (64) mit seiner Innenperipherie an eine insgesamt axial ausgerichtete Wand (65) anschließt, die parallel zur Achse der Druckvorrichtung verläuft.

6. Druckvorrichtung nach einem der vorangehenden Ansprüche , **dadurch gekennzeichnet,** daß die Einschnitte (62) am Kreisumfang halbwellenförmig in Richtung zur Achse der Vorrichtung ausgebildet sind.

7. Druckvorrichtung nach Anspruch 6 , **dadurch gekennzeichnet,** daß die Falzklammern (63) nach der Anbringung an den Einschnitten (62) halbwellenförmig in Richtung zur Achse der Vorrichtung ausgebildet sind und daß diese Klammern (63) in die Einschnitte (62) eingreifen.

8. Druckvorrichtung nach Anspruch 7 , **dadurch gekennzeichnet,** daß die besagten Klammern (63) vermittels eines axialen Rands (66) gebildet sind, den das Halteteil (60) an seiner Außenperipherie aufweist, um den Kragen (31) zu überdecken.

9. Druckvorrichtung nach einem der vorangehenden Ansprüche , **dadurch gekennzeichnet,** daß die Hülse (33) des Druckrings (30) Vorsprünge (37) aufweist, die gegenüber einigen der besagten Einschnitte (62) angeordnet sind.

10. Druckvorrichtung nach Anspruch 9 , **dadurch gekennzeichnet,** daß die Hülse (33) des Druckrings (30) eine axial offene Aussparung (36) gegenüber einem Einschnitt (62) aufweist.

11. Druckvorrichtung nach einem der vorangehenden Ansprüche , **dadurch gekennzeichnet,** daß der Kragen (31) des Druckrings (30) an seiner Innenperipherie örtliche Verformungen (34) als Drehsicherung aufweist, die am Kreisumfang zwischen zwei Einschnitten (62) angeordnet sind, um in Aussparungen der Tellerfeder (20) einzugreifen.

12. Druckvorrichtung nach Anspruch 11, in welcher der Kragen (31) des Druckrings an seiner Außenperipherie Aussparungen (35) für den Durchgang von axialen Klammern (51) aufweist, die zu einer Federscheibe (50) gehören, **dadurch gekennzeichnet,** daß sich die Aussparungen am Kreisumfang mit den Einschnitten (62) abwechseln.

13. Druckvorrichtung nach Anspruch 11 und 12 , **dadurch gekennzeichnet,** daß die örtlichen Verformungen (34) in Entsprechung zu bestimmten Aussparungen (35) vorgesehen sind.

14. Druckvorrichtung nach einem der Ansprüche 1 bis 13, in der sich der Kragen (31) über einen abgerundeten Bogen an die Hülse (33) anschließt , **dadurch gekennzeichnet,** daß der besagte Bogen und die Innenperipherie des Kragens (31) durchgehend ausgeführt sind.

## Claims

1. A connecting device of the kind which, in order that a clutch release bearing (10) can act in traction on the diaphragm (20) of a clutch, comprises firstly a connecting piece (30) which includes a generally radial collar portion (31) of V-shaped cross section, having an outwardly directed portion at its outer periphery, a dorsal face, and on its other face, an annular engagement bead (32) which is adapted to bear on the diaphragm (20) on the side of the latter opposite to the clutch release bearing (10), and a generally axial sleeve portion (33) adapted to pass through the diaphragm (20) via its central aperture, and secondly an annular coupling clip (40) arranged within the said sleeve portion (33), and which, being deformable elastically in the radial direction, is arranged for attachment of the clutch release bearing (10) by simple snap-fitting of the latter, the said coupling clip (40) being retained axially, during the snap-fitting of the clutch release bearing (10) on the connecting piece (30), by a cage (67) which is formed axially between the sleeve portion (33) of the coupling piece (30) and a retaining member (60) which is attached, by seaming, in contact with at least a portion of the dorsal face of the said collar portion (31) opposite to the said bead (32), by means of rebates (62) formed in the said collar portion (31), wherein the retaining plate (60) penetrates into the said sleeve portion (33) and has seaming lugs (63) penetrating into the said rebates (62) whereby it is interlocked on the connecting piece (30), characterised in that the rebates (62) extend radially beyond the said bead (32) in the outwardly extending portion of the collar portion (31), in that the rebates (62) are formed in the face of the collar portion (31) opposite to its dorsal face, in that the said dorsal face has a continuous surface in the region of the rebates (62), and in that the seaming lugs (63) are bent over into the rebates (62).

2. A connecting device according to Claim 1, characterised in that the seaming lugs (63) are nested into the rebates (62).

3. A connecting device according to Claim 1 or Claim 2, characterised in that the said rebates (62) are bounded by a base (64) having an inclined wall that ends at the outer periphery of the collar portion (31) of the connecting piece (30).

4. A connecting device according to Claim 3, characterised in that the said base (64) is divergent towards the outer periphery of the collar portion (31).

5. A connecting device according to Claim 4, characterised in that the said base (64) is joined at its inner periphery to an axially orientated wall (65) which is parallel to the axis of the connecting device.

6. A connecting device according to any one of the preceding Claims, characterised in that the said rebates (62) have, circumferentially, a half wave shape directed towards the axis of the device.

7. A connecting device according to Claim 6, characterised in that the seaming lugs (63) have, after being fitted in the rebates (62), a half wave shape directed towards the axis of the device, and in that the said lugs (63) penetrate into the rebates (62).

8. A connecting device according to Claim 7, characterised in that the said lugs (63) are formed in an axial flange (66), which is formed in the retaining member (60) at its inner periphery so as to embrace the collar portion (31).

9. A connecting device according to any one of the preceding Claims, characterised in that the sleeve portion (33) of the connecting piece (30) has ear elements (37) which are arranged in facing relationship to some of the said rebates (62).

10. A connecting device according to Claim 9, characterised in that the sleeve portion (33) of the connecting piece (30) has an axially open slot (36) in facing relationship with a rebate (62).

11. A connecting device according to any one of the preceding Claims, characterised in that the collar portion (31) of the connecting piece (30) has, at its inner periphery, local deformations (34) for preventing rotation, disposed circumferentially between two rebates (62) so as to penetrate into slots in the diaphragm (20).

12. A connecting device according to Claim 11, in which the collar portion (31) of the connecting piece has, at its outer periphery, slots (35) for accommodating axial lugs (51) which are part of an elastic ring (50), characterised in that the slots are in circumferential alternation with the rebates (62).

13. A connecting device according to Claims 11 and 12, characterised in that the local deformations (34) are in corresponding relationship with some of the slots (35).

14. A connecting device according to any one of Claims 1 to 13, in which the collar portion (31) is joined to the sleeve portion (33) through a rounded bend, characterised in that the said bend and the inner periphery of the collar portion (31) are continuous.
